# EUROPEAN PATENT APPLICATION

(11) **EP 4 397 296 A1**
(43) Date of publication of application: **10.07.2024**
(21) Application number: 22864645.1
(22) Date of filing: 31.08.2022
(51) Int. Cl.: A61J 3/00, B65G 47/14

(54) **MEDICINE DISPENSING DEVICE**

(30) Priority: 03.09.2021 JP 2021144238
(71) Applicant: YUYAMA MFG. CO., LTD., Toyonaka-shi, Osaka 561-0841 (JP)
(72) Inventor: OIKE, Norifumi, Toyonaka-shi, Osaka 561-0841 (JP); YAMASHITA, Koji, Toyonaka-shi, Osaka 561-0841 (JP); TANIGUCHI, Yoshinori, Toyonaka-shi, Osaka 561-0841 (JP); OHMOMO, Shinichiro, Toyonaka-shi, Osaka 561-0841 (JP)
(74) Representative: Botti & Ferrari S.p.A.
(86) International application number: PCT/JP2022/032828
(87) International publication number: WO 2023/033063

(57) **Abstract**

[Problem] To enhancing possibility for dispensing a medicine to a dispensing port one by one.

[Means for Solving Problem] A carrier part (13) included in a medicine dispensing cassette (1) comprises a first carrier part (133), a second carrier part (134) and a guiding part (132). The first carrier part and the second carrier part can carry the medicine such that a first speed of the medicine guided to the first carrier part to the dispensing port (18) becomes larger than a second speed of the medicine guided from the second carrier part to the first carrier part.

## Description

### Technical Field

The present invention relates to a medicine dispensing device.

### Background Art

In Patent Literature 1, a medicine feeder, which comprises a rotation container of which center part is concaved to be able to receive medicines randomly and of which peripheral part is formed as a flange shape so as to put the medicines along an arch shape side by side, and an output part for guiding medicines as output subjects from a top of the peripheral part to the outside, is disclosed. The medicine feeder of Patent Literature 1 comprises a width-regulation member for regulating a width of the output subject, a height-regulation member for regulating a height of the output subject, and a pinching-delivery mechanism comprising a belt feeder mechanism reaching the inside of a peripheral part of a rotation container for pinching the output subjects together with the width regulation member so as to deliver at higher speed than the peripheral part of the rotation container under the rotation.

### Prior Art Literature

### Patent Literature

Patent Literature 1: Official Gazette of Japanese Patent No. 5950876

### Summary of Invention

### Problem to be Solved by Invention

The medicine feeder of Patent Literature 1 adjusts the width between a width regulating member and a pinching-delivery mechanism and also adjusts the height between a peripheral part of the rotation container and a height regulation member. Thereby, the medicine feeder can make the medicines fall off one by one from an output part. However, the case, in which sizes of medicine samples are different from the medicine size which is contained actually in the center part of the container, may be contemplated. For example, if the medicine is a half medicine, the size of the medicine sample and the size of the medicine contained actually in the center of the container may be different. By cutting one medicine into half, two of half medicines are formed, however, if one medicine is not cut evenly, the sizes of the half medicines become different each other.

When the sizes of above two medicines are different, there is a fear that the medicine having the thinner width than the width between the width regulating member and the pinching-delivery mechanism may be inserted between the width regulating member and the pinching-delivery mechanism without being pinched by the width regulating member and the pinching-delivery mechanism. If this medicine is inserted between the width regulating member and the pinching-delivery mechanism, there is a fear that this medicine is pushed by the following medicines so that this medicine may fall off from the delivery part together with the following medicines.

One embodiment of the present invention aims to realize a medicine dispensing device of which possibility for dispensing the medicine one by one to a dispensing port can be enhanced thereby making it possible to dispense the precise number of medicines.

### Means for Solving Problem

For solving the above problem, A medicine dispensing device for dispensing a medicine to a dispensing port by carrying the medicine inputted, comprising: a receiver part receiving the medicine, a carrier part carrying the medicine to the dispensing port, the carrier part including a circular part positioned outside the receiver part when viewed in a plane view, wherein the carrier part comprises: a first carrier part adjacent to the dispensing port for carrying the medicine in a condition where the medicine is placed thereon, a second carrier part positioned inside the first carrier part for carrying the medicine in a condition where the medicine is placed thereon, and a guiding part guiding the medicine from the second carrier part to the first carrier part while guiding the medicine from the first carrier part to the dispensing port, wherein the first carrier part and the second carrier part is able to carry the medicine such that a first speed of a medicine guided to the first carrier part to the dispensing port becomes larger than a second speed of a medicine guided from the second carrier part to the first carrier part.

Furthermore, to solve the above problem, a medicine dispensing device of one embodiment of the present invention is a medicine dispensing device for dispensing a medicine from a dispensing port by carrying the inputted medicine to the dispensing port, comprising: a receiver part receiving the medicine, a carrier part carrying the medicine to the dispensing port, the carrier part including a circular part positioned outside the receiver part when viewed in a plane view, wherein the carrier part comprises: a circular carrier part adjacent to the dispensing port for carrying the medicine in a condition where the medicine is placed thereon, a guiding part guiding the medicine to the dispensing port from the circular carrier part, at least one lateral wall defining a passage path of the medicine on a placing face for placing the medicine of the circular carrier part, and a rotation plate rotating about a rotation axis extending a direction vertical to the placing face while one part protruding from the at least one lateral wall at a position adjacent to the dispensing port of the circular carrier part.

### Advantageous Effect of Invention

According to one embodiment of the present invention, the possibility of dispensing a medicine to a dispensing port one by one can be enhanced, and thereby the precise number of medicines can be dispensed.

### Brief Description of Drawings

[Fig. 1] A sign 1001 is a perspective view illustrating a condition where a medicine dispensing cassette is installed to a motor-base; a sign 1002 is a perspective view of a configuration example of a motor-base; and a sign 1003 is a drawing illustrating an arrangement example of a count sensor.
[Fig. 2] A drawing illustrating a practical example of a medicine as a dispensing object of a medicine dispensing cassette.
[Fig. 3] A perspective view of a configuration example of a medicine dispensing cassette.
[Fig. 4] A sign 4001 is the perspective view of a configuration example of a medicine dispensing cassette under a condition where a cover part is removed and a sign 4002 is a plane view of a part of a medicine dispensing cassette in this condition.
[Fig. 5] A perspective view of one example of a configuration with combining a receiver part, a circular carrier part of carrier part and a rotation plate.
[Fig. 6] A sign 6001 is a schematic view showing respective configurations of a receiver part and a carrier part and a sign 6002 is a schematic view of a configuration shown by the sign 6001 in a state viewed from the different direction.
[Fig. 7] A partial enlarged view of a carrier part.
[Fig. 8] Drawings illustrating configuration examples of a height regulation body and a width regulation body.
[Fig. 9] A sign 9001 is a perspective view of a configuration example of a guiding member and a sign 9002 is a plane view of a configuration example of first displacement member and second displacement member.
[Fig. 10] A partial enlarged view of a medicine dispensing cassette.
[Fig. 11] A block diagram illustrating configuration examples of a medicine dispensing cassette and motor-base.
[Fig. 12] A flowchart of motion example in a medicine dispensing cassette.
[Fig. 13] A plane view of an entire body of medicine dispensing cassette in a condition where a cover part is removed.

### Embodiment for Practicing Invention

### [Embodiment 1]

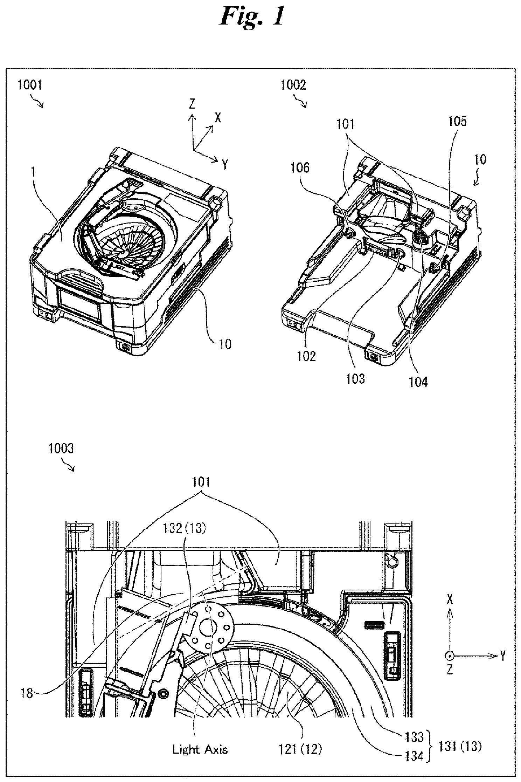

With respect to one embodiment of the present invention, a detailed description will be provided using Fig. 1-Fig. 12. First, a condition where a medicine dispensing cassette 1 (medicine dispensing device) is installed to a motor-base 10 will be described depending on Fig. 1. A sign 1001 of Fig. 1 is a perspective view illustrating a condition where the medicine dispensing cassette 1 is installed to the motor-base 10; a sign 1002 is a perspective view of a configuration example of the motor-base 10; and a sign 1003 is a drawing illustrating an arrangement example of a count sensor 101.

As shown by the sign 1001 of Fig. 1, by connecting the medicine dispensing cassette 1 to the motor-base 10, dispensing processing of the medicine becomes realized by the medicine dispensing cassette 1 with receiving control of the motor-base 10. The medicine dispensing cassette 1 is a member, which dispenses these medicines from the dispensing port 18, by feeding inputted medicines positively to a dispensing port 18 (refer the sign 1003 of Fig. 1). The motor-base 10 is a member which controls motions of the medicine dispensing cassette 1 by being placed with the medicine dispensing cassette 1 and by being connected thereto.

Now, according to the present description, the description will be provided with using the example of the medicine dispensing cassette in which the medicines of optional kinds are dispensed every unit amount (for example, one by one) by changing driving conditions. That is, a fixed cassette, which dispenses the medicine of predetermined kind to a medicine folding device for folding medicines, which a patient takes according to formulation information, and a medicine dispensing cassette together with a hand-sowing unit to which the medicines are hand-sewed etc. will be described as examples. However, a function of the medicine dispensing cassette described in this description may be applied, for example, to a tablet counting device for counting the number of tablets and/or also to a dispensing device for dispensing medicines per unit formulation to one pouch.

Hereinbelow, prior to explaining practical configurations about the medicine dispensing cassette 1 and the motor-base 10, practical examples of the medicine which is to be dispensing objects of the medicine dispensing cassette 1 will be explained.

### [Practical Example of Cut Medicine]

The medicine which is to be the dispensing object of the medicine dispensing cassette 1 is mainly to be a tablet (medicine for internal use) rather than the medicine that is contained in a non-takeable medicine container (for example, injection) and means medicines which are not contained in medicine containers etc. that are not takeable, or medicines themselves that are not applied with non-takeable wrappings. According to the present description, the explanation will be provided with assuming that the medicine to be the object for the above dispensing is a cut-tablet (for example, a tablet cut into approximately half (half tablet)) (hereafter referred to cut-tablet). Here, although the medicine dispensing cassette 1 may simply target uncut-tablets (tablet per one tablet) or a capsule, the embodiment will effectively work when the medicines that are easy to be damaged and/or broken are treated.

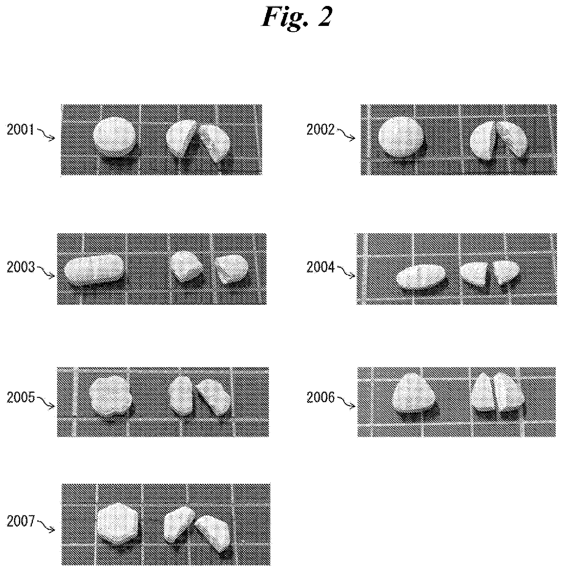

Fig. 2 is a drawing illustrating the practical example of the medicines as dispensing objects of the medicine dispensing cassette 1. The sign 2001 of Fig. 2, the sign 2002 of Fig. 2 is one example of a sugar-coated tablet and one example of a cut-tablet of that sugar-coated tablet, respectively. The sugar-coated tablet of the sign 2002 has non-flat center regions at an upper region and a bottom region in its cross-sectional shape. Thus, the sugar-coated tablet or the cut-tablet of the sugar-coated tablet is unstable and is easy to roll when they are put on the placing face.

The sign 2003 in Fig. 2 is a drawing illustrating one example of the tablet having an approximately rectangle shape in a plane view while having convex shapes at an upper region and a bottom region in the cross-sectional shape when being cut and one example of the cut-tablet of this tablet. The sign 2004 of Fig. 2 is a drawing illustrating one example of the tablet having an ellipsoidal shape in a plane view while having convex shapes at an upper region and a bottom region in the cross-section shape when being cut and one example of the cut-tablet of this tablet. The tablets shown by the sign 2003 and the sign 2004 have, similarly to the sugar-coated tablet shown by the sign 2002, non-flat center region at the upper regions and the bottom regions in their cross-sectional shape when being cut, and are, when being put on the placing face, unstable and easy to roll when they are put on the placing face.

The sign 2005 of Fig. 2 is a drawing illustrating one example of the tablet having an approximately square shape in a plane view while having approximately flat shapes at an upper region and a bottom region in the cross-sectional shape when being cut and one example of the cut-tablet of this tablet. The sign 2007 of Fig. 2 is a drawing illustrating one example of the tablet having a hexagonal shape in a plane view while having approximately flat shapes at an upper region and a bottom region in the cross-section shape when being cut and one example of the cut-tablet of this tablet. As shown in the sign 2005 and the sign 2007, the tablets having approximately flat shapes when being cut are hard to roll and are stable even when they are put on a placing face. However, when the center regions of approximately flat become smaller, the stability become less when these tablets are placed.

A sign 2006 of Fig. 2 is a drawing illustrating one example of the tablet having a triangle shape in a plane view while having convex shapes at an upper region and a bottom region in the cross-sectional shape when being cut and one example of the cut-tablet of this tablet. Since the tablet shown by the sign 2007 does not have flat center regions at the upper region and the bottom region, this is unstable and is easy to roll when they are placed on a placing face.

Now, it is considered a case that, using a conventional medicine dispensing cassette, the tablet and the cut-tablet shown by the sign 2001 (however, the tablet and the cut-tablet have relatively small center regions of approximately flat), and also the tablet and the cut-tablet shown by the sign 2002-the sign 2007 are dispensed. In this case, when these tablet and the cut-tablet are dispensed to a dispensing port from the medicine dispensing device, there is a fear that a plurality of tablets becomes continuous (that is at simultaneously) to be dispensed. That is, depending on the shape and/or the stability when placing the tablet on the placing face, there is a fear that a plurality of the medicines may be dispensed from the dispensing port continuously. In this case, the count sensor results in the counting in which a plurality of the medicines is counted as one medicine. Here, and in this case, much more medicines should be dispensed than a target tablet number (the number designated as the number of the medicines to be dispensed). The medicine dispensing cassette 1, without depending on the shapes and the stability of medicines, makes it possible to dispense the medicines one by one to the dispensing port 18, and thus, the dispensing with the precise number becomes possible.

Now, in the description hereunder, so far as otherwise noted, the description will be provided using the example in which the cut-tablets are dispensed.

### [Configuration of Motor-Base]

The motor-base 10 comprises, as shown by the sign 1002 of Fig. 1, a count sensor 101, connector 102, and driving members 103-106.

The count sensor 101 is the sensor, as shown by the sign 1003 of Fig. 1, for detecting the cut-tablets delivered from a circular carrier part 131 of the medicine dispensing cassette 1 and passed (fallen off) through the dispensing port 18. The count sensor 101 counts the number thereof by detecting the cut-tablets passed through the dispensing port 18. The count sensor 101 is arranged such that a detection region for objectives is formed on a pathway of the cut-tablet delivered from the circular carrier part 131 (refer to "light axis" shown by a sign 1003 of Fig. 1).

The count sensor 101 is a so-called light-receiving type sensor to specify presence or non-presence of the objectives within the detection region by receiving or not receiving the light emitted from a light-emitting part at the position opposite to the light-emitting part by a light receiving part. However, the count sensor 101 may be a so-called referencing-type sensor to specify presence or non-presence of the objectives within the detection region by reflecting the light emitted from the light emission part with the objectives and receiving the reflected light with a light-receiving part. In this case, the light-emitting region and the light-receiving region are disposed parallel.

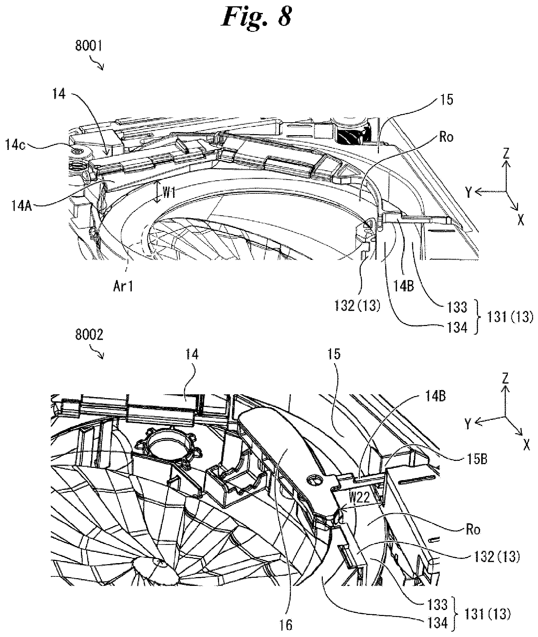

The connector 102, by being connected to a connector of the medicine dispensing cassette 1 (not shown), supplies electric power to the medicine dispensing cassette 1. The driving members 103 and 104 are each connected to a first rotation mechanism for rotating a first rotation body 121 of the medicine dispensing cassette 1 and a second rotation mechanism for rotating a first carrier part 133 of the circular carrier part 131 so as to supply driving power to the first rotation mechanism and the second rotation mechanism. The driving members 105 and 106 are each connected to a height-regulation body moving mechanism for moving a height regulation body 14 of the medicine dispensing cassette 1 (refer to Fig. 8) and a width-regulation body moving mechanism for moving a width regulation body 15 (refer to Fig. 8). The driving members 105 and 106 supplies driving power to the height-regulation body moving mechanism and the width-regulation body moving mechanism.

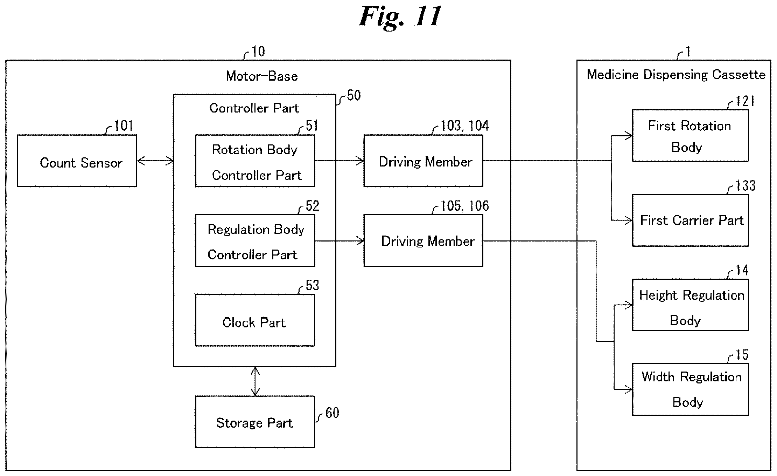

Furthermore, as shown in Fig. 11, although the motor-base 10 comprises a controller part 50 and a storage part 60, these members will be described later.

Here, the motor-base 10 will be described as one that comprises the controller part 50 and the storage part 60 but not limited thereto. For example, the controller part 50 and the storage part 60 may be realized by a controller device for controlling motions of the medicine dispensing cassette 1, which are separately disposed from the motor-base 10 and the medicine dispensing cassette 1. In this case, the controller device is connected to the motor-base 10 and controls the motions of the medicine dispensing cassette 1 by controlling the motions of the motor-base 10.

Besides, although the medicine dispensing cassette 1 and the motor-base 10 are formed as separated mechanisms, these may be an integrated type. In this case, for example, the medicine dispensing cassette 1 may be allowed to comprise the count sensor 101, controller part 50, and memory part 60.

### [Configuration of Medicine Dispensing Cassette]

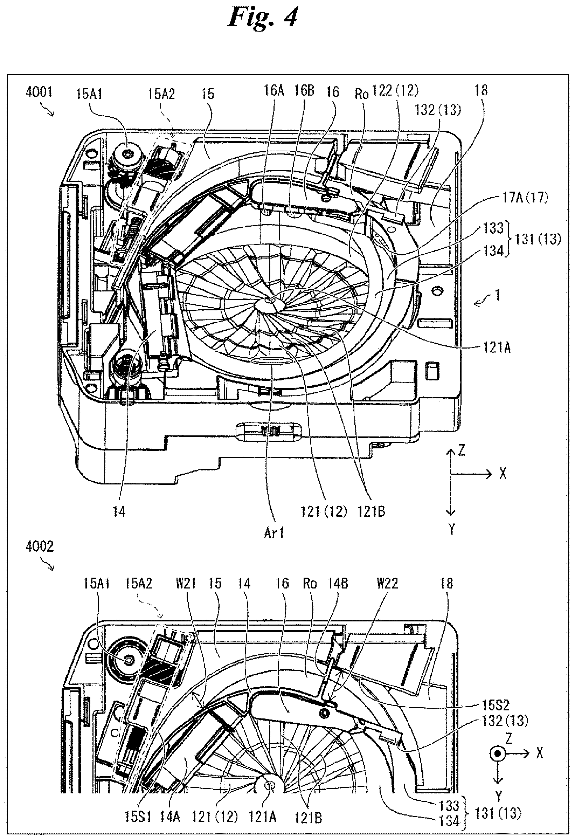

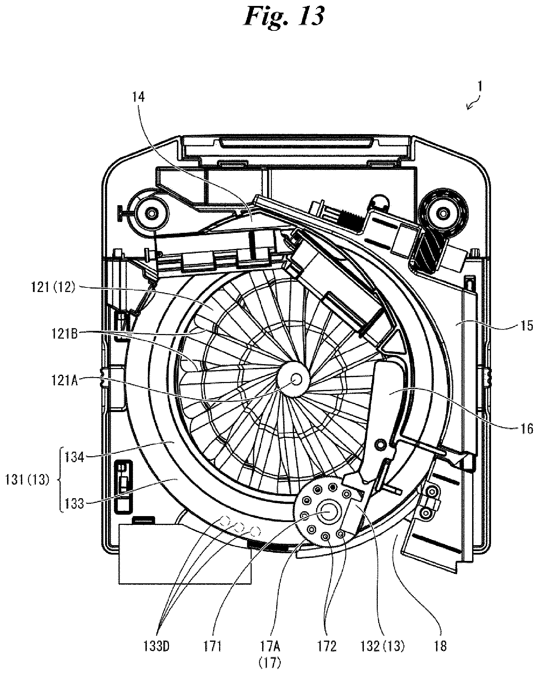

Fig, 3 is a perspective view of a configuration example of the medicine dispensing cassette 1.A sign 4001 of Fig. 4 is a perspective view of the configuration example of the medicine dispensing cassette 1 under a condition where a cover part 11 is removed, and a sign 4002 is a plane view of one part of the medicine dispensing cassette 1 in this condition. Fig. 13 is a plane view of the entire body of the medicine dispensing cassette 1 in this condition.

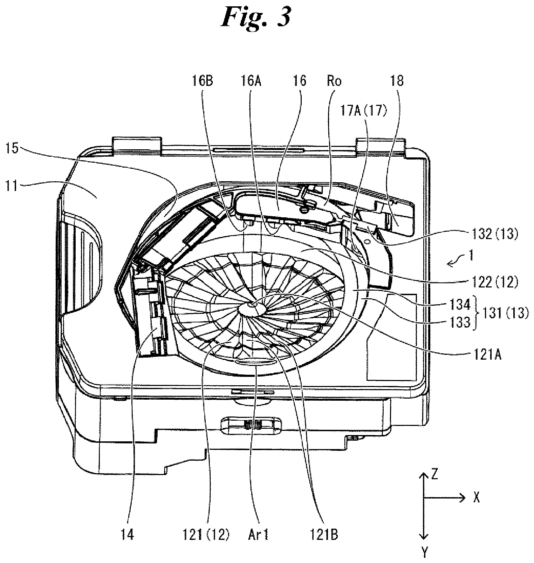

The medicine dispensing cassette 1 comprises as shown in Fig. 3, Fig. 4 and Fig. 13, generally a cover part 11, receiver part 12, carrier part 13, height regulation body 14, width regulation body 15, guiding member 16, and carry-supporting mechanism 17. Now, in the description hereunder, the descriptions referring Fig. 3 and Fig. 4 should also refer Fig. 13.

In the medicine dispensing cassette 1, the cut-tablet is inputted into the receiver part 12 which is able to receive the cut-tablet. Then, the cut-tablet transfers in a moving region Ar1, by the rotation of the first rotation body 121 of the receiver part 12, from the first rotation body 121 to the circular carrier part 131 of the carrier part 13. Then, the cut-tablet falls off, with the rotation of the circular carrier part 131 and with guiding by a guiding part 132 of the carrier part 13, from the circular carrier part 131 to the dispensing port 18. The rotations of the first rotation body 121 and the circular carrier part 131 are the rotations toward the clockwise direction when viewed from an upper side of the sheet plane of Fig. 13, and as described later, are the rotations under the positive feeding motion. Furthermore, the cut-tablet on the circular carrier part 131 is made aligned into one line by the height regulation body 14 and the width regulation body 15. Hereafter, each member will be described in detail.

### <Cover Part•Dispensing Port>

The cover part 11 is one part of a casing which is disposed at the upper part of the medicine dispensing cassette 1 (an input side of the cut-tablet) and protects the inside of the medicine dispensing cassette 1. The dispensing port 18 is an opening part from which the cut-tablet carried by the circular carrier part 131 falls off.

### <Receiver Part•Carrier Part>

The receiver part 12 and the carrier part 13 function as a medicine carrier mechanisms for carrying the inputted cut-tablet to the dispensing port 18. Particularly, the receiver part 12 and the carrier part 13 carry, under the positive feeding, the inputted cut-tablet toward the dispensing port 18. Under the reverse feeding, the carrier part 13 carries the cut-tablet placed on the carrier part 13 to the reverse direction opposite to the direction of the positive feeding. That is, the carrier part 13 can switch the positive feeding motion for feeding the cut-tablet positively and the reverse feeding motion for feeding the cut-tablet reversely. However, the receiver part 12, as well as the carrier part 13, may switch the positive feeding motion and the reverse feeding motion. Here, the positive feeding may be paraphrased to a positive rotation and the reverse feeding may be referred to a reverse rotation.

As shown in a sign 4001 of Fig. 4, the receiver part 12 comprises the first rotation body 121 and a separation wall 122. The first rotation body 121 defines a bottom of the receiver part 12 and the separation wall 122 defines a lateral wall of the receiver part 12.

The first rotation body 121 is a rotation member inner disk, inner race) for making by its rotation the inputted cut-tablet move toward an outer peripheral side (radially outward side). Particularly, as shown in Fig. 3 and Fig. 4, the first rotation body 121 is a rotation member having a disk shape being rotatable about a first shaft part 121A.

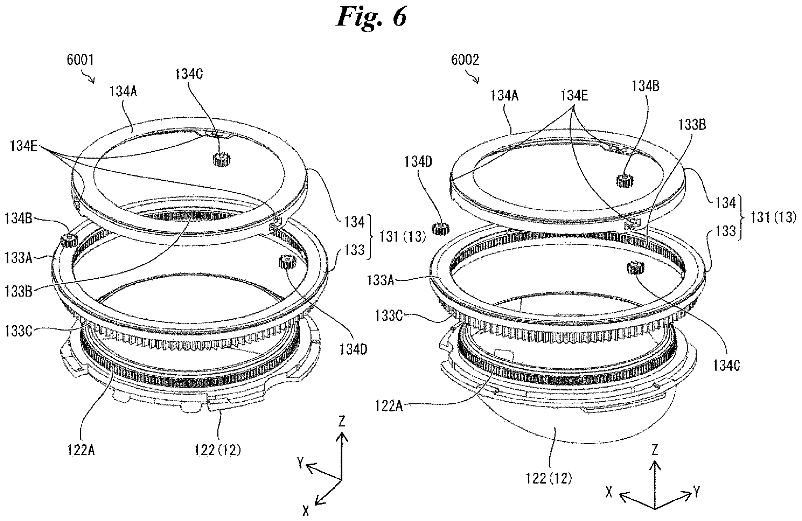

Furthermore, as shown by a sign 4001 of Fig. 3 and Fig. 4, the separation wall 122 is disposed vertically along a peripheral part of the first rotation body 121. Thereby, the inputted cut-tablet is placed on the first rotation body 121. Particularly, the inputted cut-tablet is received in a receiving space that is defined by the first rotation body 121 and the separation wall 122. Furthermore, as shown in Fig. 6 described later, the separation wall 122 has a plurality of tooth 122A positioned at an outer circumference of the separation wall 122 (+Z axis direction). A plurality of the tooth 122A, as described later, engages with a planetary gears 134B-134D of the second carrier part 134. The separation wall 122 comprising a plurality of the tooth 122A functions as a sun gear in a planetary gear mechanism.

The first rotation body 121 is disposed slantingly to an XY plane (for example, the placing face of the medicine dispensing cassette 1). That is, the first axis part 121A of the first rotation body 121 is disposed slantingly to a Z axis direction (vertical direction) at a given angle.

In addition, as shown in Fig. 3-Fig. 4, to an upper face of the first rotation body 121, a plurality of convex ridges 121B is disposed radially so as to suppress rolling motions of the cut-tablet on this upper face. The cut-tablet inputted to the first rotation body 121 moves toward an outer peripheral part by centrifugal force generated by the rotation of the first rotation body 121.

The peripheral end part of each convex ridge 121B has a slope to be parallel to the placing face 134A of the second carrier part 134 of the carrier part 13. Thereby, the possibility of damaging the cut-tablet when the cut-tablet moves between the receiver part 12 and the second carrier part 134 of the carrier part 13 can be lowered. Specifically, the possibility of damaging the cut-tablet, when the cut-tablet is returned to the receiver part 12 from the second carrier part 134, can be lowered.

Generally, a tablet is coated with a protection film so as not to be easily damaged. However, in the case of the cut-tablet, the protection film is not coated on the cut surface. Thus, the cut-tablet is weaker to impacts from the outside and is easily damaged than the uncut tablet. That is, the cut-tablet is easy to generate powder and/or fragments from the cut surface. Thus, in the medicine dispensing cassette 1 treating the cut-tablet, it is useful to impart the slope to the peripheral end part as described above.

Furthermore, for providing a gap in at least moving region Ar1, sizes and positional relations of the first rotation body 121 and the circular carrier part 131 of the carrier part 13 are defined. The moving region Ar1 means the region where the cut-tablet transfers from the first rotation body 121 to the second carrier part 134 of the carrier part 13.

Generally, the gap is provided between the receiver part 12 and the second carrier part 134 to an extent that the first rotation body 121 does not contact to the second carrier part 134. However, considering the transfer of the medicine in the moving region Ar1, the first rotation body 121 and the second carrier part 134 are not designed so as to provide positively the gap. In a case that the cut-tablet is treated as the medicine dispensing cassette 1, the powder and/or the fragments are easy to be generated as described above. Thus, by providing the gap positively (at least providing wider than conventional one), the powder and/or the fragments can be recovered by making fall down to the lower direction of the first rotation body 121.

Here, for example, a case is considered where the cut-tablet of the different kind from a first cut-tablet (second cut-tablet) is dispensed after dispensing the cut-tablet (the first cut-tablet). In a case where there is no gap, the residue of the powder and/or the fragments of the first cut-tablet on the first rotation body 121 and the circular carrier part 131 becomes much more compared to a case where the gap is provided. Thus, in the case where there is no gap, when compared to the case where the gap is provided, there is the high possibility that the powder and/or the fragments of the first cut-tablet should be dispensed together with the second cut-tablet. Dispensing of the cut-tablet to be a dispensing object together with the powder and/or the fragments of the other cut-tablet is not desirable in the viewpoint of safety. Therefore, it is useful to dispose the gap in the medicine dispensing cassette 1 treating the cut-tablet. However, the gap should be limited in its size to an extent that the cut-tablet does not fall off.

Besides, the medicine dispensing cassette 1 encloses inside a first rotation mechanism for making the first rotation body 121 rotate. The first rotation mechanism is, for example, realized by the first axis part 121A and a driving member (not shown) for making the first axis part 121A rotate about the first rotation axis of the first axis part 121A. By connecting the driving member 103 of the motor-base 10 to the driving member of the first rotation mechanism, the first rotation body 121 is made to rotate with receiving the driving power from the motor-base 10. Here, the driving of the first rotation mechanism can be controlled by a rotation body control part 51 (refer to Fig. 11).

The first rotation body 121 and the circular carrier part 131 rotate to the same directions under the positive feeding such that the inputted cut-tablet is transferred to the dispensing port 18. At least one part of the cut-tablet transferred to the second carrier part 134 of the circular carrier part 131 from the first rotation body 121 at the moving region Ar1 is fed positively to the dispensing port 18. On the other hand, the residual cut-tablet is made to fall off toward the side of the receiver part 12 by the height regulation body 14, width regulation body 15 and guiding member 16 (first displacement member 16A and second displacement member 16B).

### <Detail of Carrier Part>

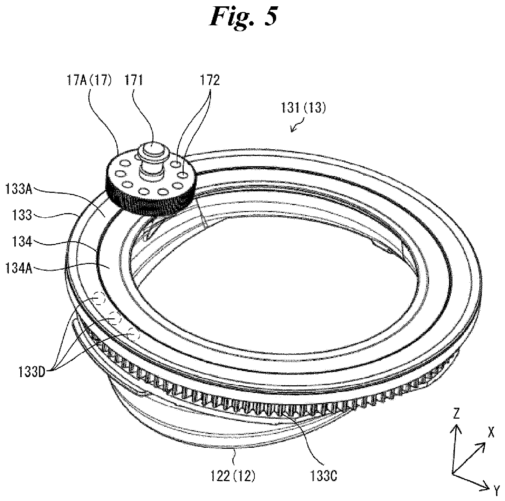

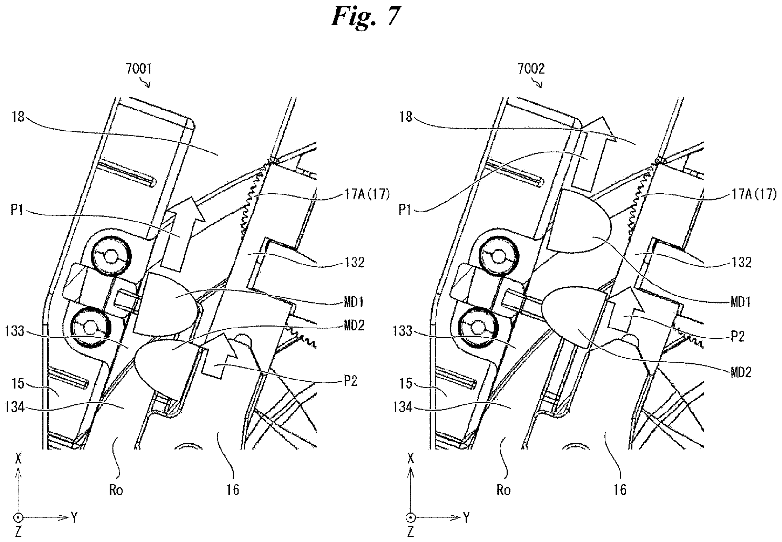

Using Fig. 3-Fig. 7, the carrier part 13 will be detailed. Fig. 5 is a perspective view of one example of the configuration with combining the receiver part 12, circular carrier part 131 of the carrier part 13 and rotation plate 17A described later. A sign 6001 of Fig. 6 is a schematic view showing the respective configurations of the receiver part 12 and the circular carrier part 131 of the carrier part 13 and a sign 6002 is a schematic view of a configuration shown by the sign 6001 in a condition viewed from the different direction. Fig. 7 is a partial enlarged view of the carrier part 13. A sign 7001 of Fig. 7 shows a condition where the cut-tablet MD1 being dispensed (carried) before and the following cut-tablet MD2 become close and a sign 7002 shows a condition where the cut-tablet dispensed before (MD1) and the following cut-tablet MD2 become apart.

The carrier part 13, when viewed in a plain view from the +Z axis direction, comprises a circular part positioned outside the receiver part 12 and carries the cut-tablet passed from the first rotation body 121 to the dispensing port 18. As shown in Fig. 3-Fig. 6, the carrier part 13 comprises the circular carrier part 131 and the guiding part 132. Furthermore, as shown in Fig. 3-Fig. 6, the circular carrier part 131 comprises a first carrier part 133 and a second carrier part 134. The circular carrier part 131 is adjacent to the dispensing port 18 and carries the cut-tablet under a condition where the cut-tablet is placed thereon.

### (First Carrier Part)

The first carrier part 133 is a rotatable member having a circular shape and rotates about a rotation axis along the ± Z axis direction. In addition, as shown in Fig. 5 and Fig. 6, the first carrier part 133 comprises a placing face 133A for placing the cut-tablet. With the cut-tablet transferring from the placing face 134A of the second carrier part 134 to the placing face 133A of the first carrier part 133, the cut-tablet is placed on the placing face 133A of the first carrier part 133. The placing face 133A of the first carrier part 133 is disposed horizontally so as to be approximately parallel to the XY plane. Furthermore, the first carrier part 133 carries, by rotating about the rotation axis, the cut-tablet under a condition where the cut-tablet is placed on the placing face 133A. Particularly, the first carrier part 133 is adjacent to the dispensing port 18 and the cut-tablet on the placing face 133A carried by the first carrier part 133 is delivered from the dispensing port 18 through guiding by a guiding part 132 (described later). The first carrier part 133 is placed at the outer most periphery of the circular carrier part 131. Thus, the first carrier part 133 is named as a "outer-most race".

As shown in Fig. 6, the first carrier part 133 comprises a plurality of first tooth 133B at a lateral face of the inner peripheral side (inner peripheral face) of the first carrier part 133. A plurality of the first tooth 133B engages with the planetary gears 134B-134D of the second carrier part 134. The first carrier part 133 is connected with the second carrier part 134 through the planetary gears 134B-134D. The first carrier part 133 comprises a plurality of first tooth 133B and functions as an inner gear of the planetary gear mechanism by making a plurality of the first tooth 133B engage with the planetary gears 134B-134D.

The medicine dispensing cassette 1 encloses inside a second rotation mechanism for making the first carrier part 133 rotate. The second rotation mechanism is, for example, realized by a plurality of second tooth 133C disposed to the first carrier part 133 (refer to Fig. 5 and Fig. 6). The plurality of second tooth 133C is particularly disposed at the lateral face of the outer peripheral side (outer peripheral face) opposite to the inner peripheral face of the first carrier part 133 to which a plurality of the first tooth 133B is disposed. By engaging the driving member 104 of the motor-base 10 with a plurality of the second tooth 133C, the first carrier part 133 is made to rotate by the driving force imparted to the plurality of second tooth 133C from the motor-base 10. Furthermore, by rotating the first carrier part 133, the second carrier part 134 also rotates to the same direction with the first carrier part 133. A rotation mechanism of the second carrier part 134 will be described later. Now, driving of the second rotation mechanism is controlled by the rotation body controller part 51.

Besides, as sown in Fig. 5 and Fig. 13, to the first carrier part 133, a plurality of first magnets 133D having different magnet poles is disposed alternatively at the position outer than the rotation axis 171 of the rotation plate 17A described later. The language "the position outer than the rotation axis 171" means the position where the distances from the first axis part 121A of the first rotation body 121 to a plurality of the first magnets 133D become longer than the distance from the first axis part 121A to the rotation axis 171. Besides, the language "different magnet poles" means a plurality of the first magnet 133D includes the N pole and the S pole. That is, according to the present embodiment, as a plurality of the first magnets 133D, the N poles and the S poles are alternatively disposed to the first carrier part 133.

The first magnets 133D are disposed inside the first carrier part 133 or on the face of the opposite side to the placing face 133A. Now, according to the present embodiment, the first magnets 133D are disposed along the entire periphery of the first carrier part 133. In Fig. 5, only a part of a plurality of the first magnets 133D disposed along the entire periphery of the first carrier part 133 is illustrated. However, the first magnets 133D may be disposed in a configuration where those are disposed to one part of the first carrier part 133 along the circumferential direction of the first carrier part 133.

### (Second Carrier Part)

The second carrier part 134 is a rotation member having a circular shape of which rotation axis extends to the ± Z axis direction. As shown in Fig. 3-Fig. 5, the second carrier part 134 is positioned inside the first carrier part 133. The second carrier part 134 may be, for example, disposed adjacent to the first carrier part 133 inside the first carrier part 133. Besides, as shown in Fig. 5 and Fig. 6, the second carrier part 134 comprises the placing face 134A for placing the cut-tablet. The placing face 134A of the second carrier part 134 is disposed horizontally so as to become approximately parallel to the XY plane. The second carrier part 134 is positioned outside from the receiver part 12 and is positioned inside from the first carrier part 133, and thus, may be named as "outer-inner race".

The second carrier part 134 rotates to the same direction with the first carrier part 133 about the same rotation axis of the first carrier part 133. The cut-tablet is carried from the first rotation body 121 of the receiver part 12 by the rotation of the first rotation body 121 and transfers to the second carrier part 134 thereby being placed on the placing face 134A of the second carrier part 134. Then, the second carrier part 134 carries the cut-tablet under a condition where the cut-tablet is placed on the placing face 134A.

As shown in Fig. 6, the second carrier part 134 comprises planetary gears 134B, 134C, and 134D. Now, the planetary gears are not limited to three, and may be disposed at least one. The planetary gears 134B-134D are each disposed inside a plurality of holes 134E disposed at the lateral side of the second carrier part 134. The planetary gears 134B-134D protrude to the outside from the lateral face of the second carrier part 134 to engage with a plurality of the first tooth 133B of the first carrier part 133.

Furthermore, the planetary gears 134B-134D protrude to the inside from the lateral side of the second carrier part 134 to engage with a plurality of the tooth 122A despised outside the separation wall 122 of the receiver part 12. A plurality of the tooth 122A is fixed to the separation wall 122 and the separation wall 122 is fixed to the medicine dispensing cassette 1.

When the first carrier part 133 rotates by the rotation force to the second tooth 133C imparted by the driving member 104 of the motor-base 10, by the rotation thereof, a plurality of the first tooth 133B and a plurality of the planetary gears 134B-134D engaging with the plurality of tooth 122A rotate. Due to the rotation of the planetary gears 134B-134D, the second carrier part 134 rotates to the same direction with the first carrier part 133. Besides, the second carrier part 134 rotates according to the rotation of the planetary gears 134B-134D such that these rotate in the slower speeds than the first carrier part 133. The second carrier part 134 rotates, for example, in about half speed of the first carrier part 133. As described above, the medicine dispensing cassette 1 can make the second carrier part 134 rotate in conjunction with the rotation of the first carrier part 133. Here, the rotation speed of the second carrier part 134 may be determined by, for example, the ratio of the number of the plural tooth 122A to the number of the plural first tooth 133B in the first carrier part 133 and/or the ratio of a pitch-circle diameter of the plural tooth 122A to a pitch-circle diameter of the plural first tooth 133B.

As described above, the second carrier part 134 functions as the planetary gear mechanism together with the plural tooth 122A disposed outside the first carrier part 133 and the separation wall 122. Thereby, the second carrier part 134 can rotate to the same direction with the first carrier part 133 in conjunction with the rotation of the first carrier part 133. Besides, the second carrier part 134 carries the cut-tablet through the rotation as the part of the planetary gear mechanism. Thus, there is no need to dispose a driving part with which the motor-base 10 makes the second carrier part 134 to rotate.

As described above, by using the planetary gear mechanism, with the simple configuration while merely driving the first carrier part 133, the first carrier part 133 and the second carrier part 134 can be made to rotate in the same direction while providing different rotational speeds.

Now, a plurality of the tooth 122Amay merely make the part of the medicine dispensing cassette 1 function as the sun gear by engaging with the planetary gears 134B-134D and may not be disposed to the separation wall 122. For example, a plurality of the tooth 122Amay be formed as the separated member from the separation wall 122 and may be disposed to the other part of the medicine dispensing cassette 1. However, by the configuration where a plurality of the tooth 122A is disposed to the outer periphery at the top of the separation wall 122, the first carrier part 133 and the second carrier part 134 may be made to rotate with a simpler mechanism.

### (Guiding Part)

The guiding part 132 guides the cut-tablet from the second carrier part 134 to the first carrier part 133. Besides, the guiding part 132 guides the cut-tablet from the first carrier part 133 to the dispensing port 18. Particularly, as shown in Fig. 4 and Fig. 7, the guiding part 132 is a non-displaceable member disposed on the circular carrier part 131 and forms a lateral wall at the downstream side along the rotation direction of the circular carrier part 131 among the lateral walls forming the passage path Ro. According to the present embodiment, the guiding part 132 forms one part of the lateral wall nearer to the first rotation body 121 among the lateral walls defining a passage path Ro together with the guiding member 16 described later. The passage path Ro is a carriage-path along which the cut-tablet is carried on the placing face 133A and 134A. Particularly, the guiding part 132, as shown by the sign 4002 of Fig. 4, is disposed vertically at the position opposite to the second wall face 15S2 of the width regulation body 15 described later and at the side toward the dispensing port 18 from the first displacement member 16A and the second displacement member 16B of the guiding member 16. Besides, the guiding part 132 defines one part of the passage path Ro together with the second wall face 15 S2. In other words, the guiding part 132 is a lateral wall member defining the lateral wall of the passage path Ro. The width regulation body 15 described later is also considered to be a lateral wall member defining this lateral wall. Within the passage path Ro, a region defined by the guiding part 132 is considered to be an end region on the circular carrier part 131 (medicine guiding region) with which the cut-tablet is guided to the dispensing port 18.

As shown in Fig. 7, the guiding part 132, when viewed from a plain view along the + Z axis, is disposed at an upper side of the placing face 133A and the placing face 134A so as to cross the first carrier part 133 and the second carrier part 134 at an upper region (+ Z axis direction) while extending to the side toward the dispensing port 18. Because the guiding part 132 is disposed in such configuration, the medicine dispensing cassette 1 can carry the cut-tablet along the guiding part 132 from the second carrier part 134 to the first carrier part 133 by the rotations of the first carrier part 133 and the second carrier part 134. Furthermore, after the cut-tablet is carried from the second carrier part 134 to the first carrier part 133, the cut-tablet can be carried from the first carrier part 133 to the dispensing port 18.

### (Motion Example of Carrier Part)

Hereafter, a motion example of the carrier part 13 and a carry-flow of the cut-tablet due to this motion will be described. First, when the first carrier part 133 rotates by a motion of the driving member 104 of the motor-base 10, the second carrier part 134 also rotates in the speed slower than the first carrier part 133. The cut-tablet inputted to the receiver part 12 transfers from the first rotation body 121 of the receiver part 12 to the placing face 134A of rotating second carrier part 134. Then, the cut-tablet on the placing face 134A is carried along the rotation direction of the second carrier part 134. The cut-tablet carried by the second carrier part 134 transfers, when becoming contact with the guiding part 132, along the guiding part 132 by the rotation force of the second carrier part 134, and then is guided from the placing face 134A of the second carrier part 134 onto the placing face 133A of the first carrier part 133. A moving speed of the cut-tablet on the second carrier part 134, under a condition where the cut-tablet is guided from the second carrier part 134 to the first carrier part 133, is called as "second speed P2".

The cut-tablet guided on the placing face 133A of the first carrier part 133 is carried by the rotation of the first carrier part 133 along the guiding part 132. The cut-tablet carried by the first carrier part 133 transfers toward the dispensing port 18 side along the guiding part 132 and is dispensed from the dispensing port 18. A moving speed of the cut-tablet on the first carrier part 133, under a condition where the cut-tablet is transferred by the rotation of the first carrier part 133 along the guiding part 132 while being guided from the first carrier part 133 to the dispensing port 18, is called as "first speed P1". As described above, the rotation speed of the first carrier part 133 is larger than the rotation speed of the second carrier part 134. Then, the first speed P1 becomes larger than the second speed P2. In other words, the first carrier part 133 and the second carrier part 134 can carry the cut-tablet such that the first speed P1 becomes larger than the second speed P2.

When the cut-tablet is dispensed from the dispensing port 18 and if the distance between this cut-tablet and the following cut-tablet is close, there is the possibility that these two cut-tablets are dispensed at the same time. Particularly, as shown by the sign 7001 of Fig. 7, there is the case that two cut-tablets may reach around the dispensing port 18 in a condition where two cut-tablets contact or become close each other. In addition, the cut-tablet, which has cut from one medicine is not stable and is easy to roll when being placed on the placing face 133A, is easy to fall off when reaching the dispensing port 18. Thus, when two cut-tablets reach around the dispensing port 18 under a condition where two cut-tablets contact or become close each other, the possibility of dispensing two cut-tablets at the same time nevertheless one cut-tablet should be dispensed at that timing becomes high and this may cause counting error. When the dispensing object is to be the cut-tablet shown in Fig. 2 (with respect to the sign 2001, the cut-tablet may have relatively small and approximately flat center regions) and especially if two cut-tablets becomes contact or becomes close each other in the surfaces other than the cut-faces, the possibility for dispensing two cut-tablets at the same time becomes higher.

Here, the medicine dispensing cassette 1 according to the present embodiment comprises the above-described carrier part 13. The carrier part 13 comprises the first carrier part 133 and the second carrier part 134, which are capable of carrying the cut-tablet, such that the first speed P1 becomes larger than the second speed P2. Furthermore, the medicine dispensing cassette 1 comprises the guiding part 132 for guiding the cut-tablet from the second carrier part 134 to the first carrier part 133 and subsequently from the first carrier part 133 to the dispensing port 18.

As shown by the sign 7001 of Fig. 7, according to this configuration, the cut-tablet MD2, which has guided from the second carrier part 134 along the guiding part 132 to the first carrier part 133, is carried at the second speed P2. Contradictory to the above, the cut-tablet MD1 after being guided from the second carrier part 134 along the guiding part 132 on the first carrier part 133 is accelerated by the first carrier part 133 which rotates at the higher speed than the second carrier part 134. As the result, the cut-tablet MD1 guided from the first carrier part 133 along the guiding part 132 to the dispensing port 18 is carried at the first speed P1 which is larger than the second speed P2. In short, the cut-tablet MD1, which is dispensed before in the cut-tablets MD1 and MD2, moves in the faster speed than the following cut-tablet MD2 on the first carrier part 133. Since the cut-tablet MD1 moves at the faster speed than the cut-tablet MD2, the cut-tablet MD1 moves in a long distance per unit time than the cut-tablet MD2. Thus, as shown by the sign 7002 of Fig. 7, the distance between the cut-tablet MD1 and the cut-tablet MD2 becomes apart. Thus, by the medicine dispensing cassette 1, the possibility, in which the distance between the cut-tablet MD1 being dispensed before and the following cut-tablet MD2 becomes apart, may be enhanced. As described above, with enhancing the possibility in which the distance between the sequential two cut-tablets becomes apart, the possibility for dispensing a plurality of the cut-tablets at the same time can be lowered. Thus, according to the medicine dispensing cassette 1, the possibility for dispensing more precisely the cut-tablets one by one can be enhanced.

### (Variation Example)

In the carrier part 13 described above, the part driven by the motor-base 10 may be the second carrier part 134 rather than the first carrier part 133. In this case, the second carrier part 134 may comprise a plurality of the tooth engaging with the driving member of the motor-base 10 (not shown). Thereby, the second carrier part 134 rotates by the rotation force imparted by the motor-base 10. In addition, in conjunction with the rotation of the second carrier part 134, the first carrier part 133 can also be made to rotate. Besides, in this case, by merely driving the second carrier part 134, the first carrier part 133 and the second carrier part 134 can be made to rotate in the same direction using the above-described planetary gear mechanism such that the rotation speeds of the first carrier part 133 and the second carrier part 134 become different.

Furthermore, in the carrier part 13, the first carrier part 133 and the second carrier part 134 may be allowed to be driven separately (independently). For example, the first carrier part 133 and the second carrier part 134 may each engage with the separate driving members of the motor-base 10 and these driving members are driven independently such that the first carrier part 133 and the second carrier part 134 may be allowed to rotate, respectively. Furthermore, when the first carrier part 133 and the second carrier part 134 are driven by separated driving members, the rotation speeds of the first carrier part 133 and the second carrier part 134 may be changed adequately. For example, when the medicine dispensing cassette 1 dispenses cut-tablets, the first carrier part 133 may be controlled to rotate at higher speed than the second carrier part 134. On the other hand, when the medicine dispensing cassette 1 dispenses non-cut tablets, the first carrier part 133 may be controlled to rotate at the same speed with the second carrier part 134. Furthermore, when the first carrier part 133 and the second carrier part 134 are driven by separate driving members, for example, only one of the first carrier part 133 and the second carrier part 134 may be driven, and the other one may be turned off.

### <Height Regulation Body•Width Regulation Body>

Also referring to Fig. 8, the height regulation body 14 and the width regulation body 15 will be described. A sign 8001 and a sign 8002 of Fig. 8 are drawings illustrating the height regulation body 14 and the width regulation body 15. Now, in Fig. 8, illustration of the carry-supporting mechanism 17 has been omitted. The height regulation body 14 and the width regulation body 15 are movable regulation bodies, which define a passage path width and changes the passage path width for regulating, depending on sizes of the cut-tablets, the passage of the cut-tablet being fed positively by the first rotation body 121 and the circular carrier part 131. The height regulation body 14 and the width regulation body 15 define on the circular carrier part 131 the passage path Ro for the cut-tablet, on which the cut-tablets in series are able to be carried to the dispensing port 18.

The height regulation body (height guide) 14 is one that regulates the carrying height W1 as the passage path width shown by the sign 8001 of Fig. 8. The width regulator body 15 regulates the carrying widths W21 and W22 as the passage path widths shown by the sign 4002 of Fig. 4. The carrying height W1 is a spacing between the bottom face of the first height regulation part 14A of the height regulation body 14 and the top face of the circular carrier part 131. In other words, the carrying height W1 is a distance of the height regulation body 14 from a surface of the passage path Ro. The carrying width W21 is a spacing from the inner peripheral part of the circular carrier part 131 to a first wall face 15S1 of the width regulation body 15, and the carrying width W22 is a spacing from the guiding member 16 to a second wall face 15S2 of the width regulation body 15.

The height regulation body 14 comprises, as shown by the sign 8001 and the sign 8002 of Fig. 8, the first height regulation part 14A and a second height regulation part 14B. The first height regulation part 14A is a member, when being fed positively, which lowers the possibility for carrying to the dispensing port 18 under a condition where the cut-tablets placed on the circular carrier part 131 are overlapped to the height direction (+ Z axis direction). The first height regulation part 14A is disposed against the moving region Ar1 at the downstream side along the carrying direction of the cut-tablet under the positive feeding while positioned at the upper region from the circular carrier part 131. The first height regulation part 14A extends, as shown by the sign 8001 of Fig. 8, from the outer peripheral part to the inner peripheral part of the circular carrier part 131 while extending along the carrying direction of the cut-tablet.

The height regulation body 14 moves along the ± Z axis direction for defining the carrying height W1 above the face of the circular carrier part 131. The medicine dispensing cassette 1 encloses a height regulation body moving mechanism for controlling movement of the first height regulation part 14A. The height regulation body moving mechanism comprises, for example, a screw member 14C. The screw member 14C, as shown by the sign 8001 of Fig. 8, is disposed with engaging with a screw receiver part formed to the height regulation body 14. According to the present embodiment, by connecting the screw member 14C with the driving member 105 of the motor-base 10, the screw member 14C rotates by receiving the moving force from the motor-base 10, thereby making the height regulation body 14 move toward the ± Z axis directions. Thereby, the carrying height W1 can be adjusted depending on sizes of the inputted cut-tablets. The driving of height regulation moving mechanism may be controlled by, for example, the regulation body controller part 52 (refer to Fig. 11).

The second height regulation part 14B, similarly to the first height regulation part 14A, is a member, when being fed positively, which lowers the possibility for carrying to the dispensing port 18 under a condition where the cut-tablets placed on the circular carrier part 131 are overlapped to the height direction. The second height regulation part 14B is disposed against the dispensing port 18 at the upstream side along the cut-tablet carrying direction under the positive feeding while positioned at the upper region of the circular carrier part 131. That is, the second height regulation part 14B is disposed at the top of the height regulation body 14.

The width regulation body (width guide) 15, as shown by the sign 8001 of Fig. 4 and Fig. 8, is disposed together with the height regulation body 14 against the carrying region Ar1 at the downstream side along the cut-tablet carrying direction under the positive feeding while positioned at the upper region of the circular carrier part 131. The width regulation body 15 is, as shown by sign 4002 of Fig. 4, comprises the first wall face 15S1 (curved face) having a diameter larger than the diameter of the inner peripheral part of the circular carrier part 131 and the second wall face 15S2 positioned at the downstream side of the first wall face 15S1 along the cut-tablet carrying direction under the positive feeding. By moving the width regulation body 15 approximately along the ± Y axis directions, the carrying widths W21 and W22 may be adjusted. As being possible to form the least carrying width W21 at one part along the circumferential direction of the first wall face 15S1, the positioning between the width regulation body 15 and the circular carrier part 131 is defined.

The width regulation body 15 moves approximately along the ± Y axis directions for defining the carrying widths W21 and W22 above the upper face of the circular carrier part 131. The medicine dispensing cassette 1 encloses inside the width regulation body moving mechanism for controlling movement of the width regulation body 15. The width regulation body moving mechanism, as shown by the sign 4001 of Fig. 4, comprises, for example, a screw member 15A1 and a piston part 15A2.

The piston part 15A2 is one that makes the width regulation body 15 move along the piston part 15A2. According to the present embodiment, by connecting the screw part 15A1 with the driving member 106 of the motor-base 10, the screw part 15A1 rotates by receiving the driving force from the motor-base 10. The driving force generated by the rotation of the screw part 15A1 is transmitted to the piston part 15A2, and by this driving force, the width regulation body 15 connected to the piston part 15A2 moves. Thereby, the carrying widths W21 and W22 may be adjusted depending on the sizes of inputted cut-tablets. Driving of the width regulation moving mechanism can be controlled by, for example, the regulation body controller part 52.

Furthermore, the width regulation body 15 is, as shown by the sign 8002 of Fig. 8, comprises an opening part 15B receiving one part of the second height regulation part 14B so that the second height regulation part 14B can move along the ± Z axis directions. By disposing the opening part 15B, the second height regulation part 14B can be disposed above the passage path Ro independently of the change in the carrying width W22. Thus, even if two cut-tablets are carried overlappingly, the cut-tablet on the upper side can be made securely to fall off by the second height regulation part 14B.

### <Guiding Part>

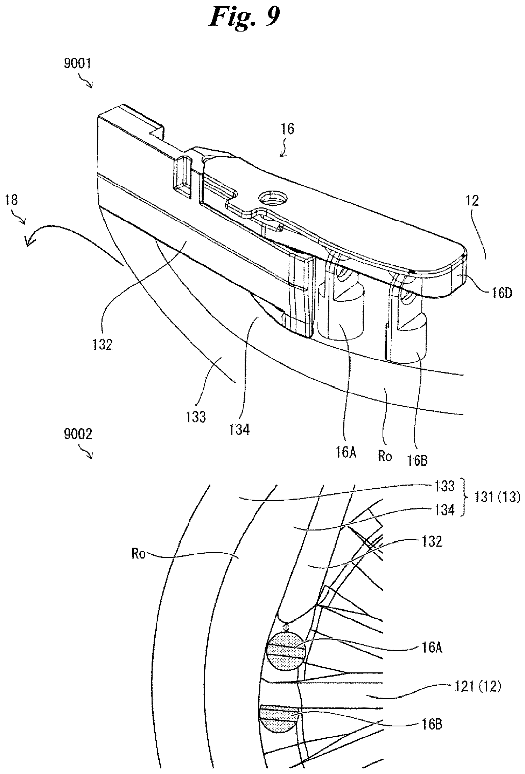

Also referring to Fig. 9, a guiding member 16 will be described. A sign 9001 of Fig. 9 is a perspective view of a configuration example of the guiding member 16 and a sign 9002 is a plane view of a configuration example of a first displacement member 16A and a second displacement member 16B. Here, in Fig. 9, the illustration of carry-supporting mechanism 17 has been omitted.

As shown in Fig. 9, the medicine dispensing cassette 1 comprises the guiding member 16, being disposed near to the dispensing port 18, for defining one part of the passage path Ro for the cut-tablet and being formed by the circular carrier part 131 and also being connected with the dispensing port 18 while guiding the cut-tablet to the dispensing port 18. The guiding part 16, as shown by the sign 4002 of Fig. 4, is disposed in the position adjacent to the guiding part 132 at the end part of the guiding part 132 opposite to the dispensing port 18 and also at the position opposite to the second wall face 15S2 of the width regulation body 15 (upstream side than the guiding part 132). Furthermore, the guiding member 16 defines one part of the passage path Ro together with the second wall face 15S2. That is, the guiding member 16 forms one part of the lateral wall defining the passage path Ro together with the guiding part 132.

The guiding member 16 comprises the first displacement member 16A, second displacement member 16B and a support member 16D. The support member 16D extends upstream from the guiding part 132 to support the first displacement member 16A and the second displacement member 16B with hanging them below the support member 16D. The first displacement member 16A and the second displacement member 16B are hung down from the support member 16D and are made to displace by contacting with the cut-tablet carried by the circular carrier part 131 while imparting the force to the cut-tablet acting in the direction for cancelling its displacement. Thereby, the first displacement member 16A and the second displacement member 16B support the carriage of the cut-tablet toward the downstream side (medicine guiding region) defined to a given width (carrying width W22) with adjusting the direction or the position of the cut-tablet.

By the displacements of the first displacement member 16A and the second displacement member 16B, impacts imparted to the cut-tablets may be absorbed. Thus, the possibility of damaging the cut-tablet may be lowered. Furthermore, since the above force is imparted to the cut-tablet, the direction (posture) of the cut-tablet can be corrected. In addition, the position of the cut-tablet may be corrected so as not to interfere the carriage of the cut-tablet by the guiding part 132. Thus, the clog-generation of the cut-tablets in the guiding part 132 will be suppressed.

Particularly, the first displacement member 16A and the second displacement member 16B are disposed at the upstream side from the guiding part 132. Thereby, prior to making the cut-tablet, which has fed positively, contact with the guiding part 132, the first displacement member 16A and the second displacement member 16B can be made to contact. Thus, the possibility of damaging the cut-tablet by contacting with the guiding part 132 may be lowered.

Furthermore, the first displacement member 16A and the second displacement member 16B make the direction or the position of the cut-tablet change so as to suppress the contact of the cut-tablet with the one end of the guiding part 132 (one end at the upstream side). By changing direction and/or the position as described above, the possibility of damaging the cut-tablet due to the contact with the guiding part 132 can be lowered while suppressing the clog-generation of the cut-tablets at this one end.

Furthermore, by disposing two displacement member such as the first displacement member 16A and the second displacement member 16B, the direction and/or the position of the cut-tablets can be changed stepwise. Thus, the clog-generation due to the cut-tablets can be suppressed efficiently.

### <Carry-Supporting Mechanism>

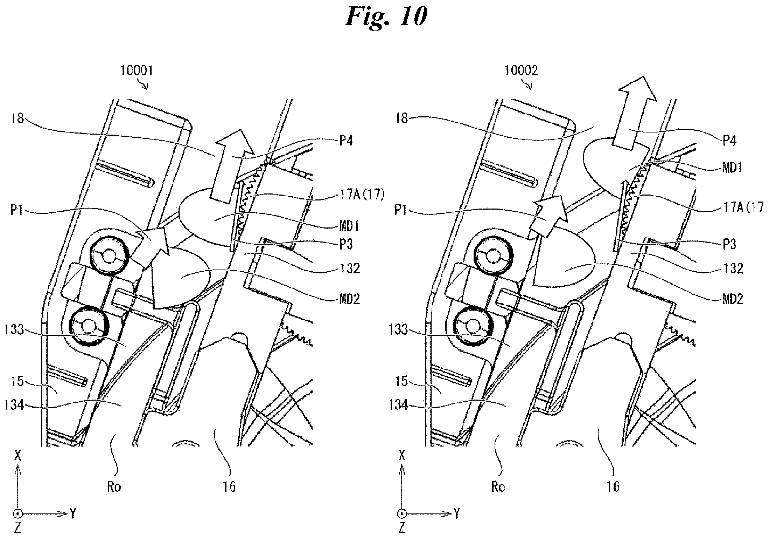

In addition to Fig. 3-Fig. 5 and using Fig. 10, the carry-supporting mechanism 17 will be described. Fig. 10 is a partial enlarged view of the medicine dispensing cassette 1 for a purpose of explaining the motion of the rotation plate 17A. A sign 10001 of Fig. 10 illustrates a condition where the cut-tablet MD1 dispensed before and the following cut-tablet MD2 become near and a sign 10002 illustrates a condition where the cut-tablet MD1 dispensed before and the following cut-tablet MD2 become apart.

The carry-supporting mechanism 17 is, by acting to the cut-tablets placed on the first carrier part 133, a mechanism for enhancing the moving speed of the cut-tablet dispensed to the dispensing port 18. As shown in Fig. 3-Fig. 5, the medicine dispensing cassette 1 comprises a rotation plate 17A as one practical example of the carry-supporting mechanism 17.

The rotation plate 17A comprises, as shown in Fig. 5, a rotation axis 171 extending to the vertical direction (± Z axis direction) against the placing face 133A of the first carrier part 133 and the placing face 134A of the second carrier part 134 while rotating to the same direction with the first carrier part 133 about the rotation axis 171. Besides, the rotation plate 17A protrudes one part thereof from the lateral wall defining the passage path Ro at the position adjacent to the dispensing port 18 of the first carrier part 133.

As for one example and as shown in Fig. 10, one part of the rotation plate 17A protrudes from the part of the guiding part 132. The part of the rotation plate 17A protruding from the guiding part 132 is positioned at the upper region (+Z axis direction) from the first carrier part 133. However, all of this part may necessarily not be placed at the upper region of the first carrier part 133. The position of this part may merely be defined such that the moving speed of the cut-tablet may be enhanced by contacting with the cut-tablet on the first carrier part 133 and this cut-tablet and the following cut-tablet on the second carrier part 134 can be made apart. For example, within the rotation plate 17A, at least the part protruding from the guiding part 132 at most may be placed at the upper region (+ Z axis direction) of the first carrier part 133.

As described above, one part of the rotation plate 17A protrudes from one part of the guiding part 132 at the position adjacent to the dispensing port 18. Thus, by simple configurations, the moving speed of the cut-tablet being dispensed to the dispensing port 18 can be enhanced.

The rotation plate 17A, as shown in Fig. 5, is disposed with a plurality of the second magnets 172 having the different magnetic pole alternatively along the circumferential direction of the rotation plate 17A at the opposite positions to the first magnets 133D when the first carrier part 133 is rotated. The language "different magnetic pole" means that the N pole and the S pole are included in a plurality of the second magnets 172. That is, according to the present embodiment, the N poles and the S poles are disposed to the rotation plate 17A alternatively as a plurality of the second magnets 172. The positional relation between the first carrier part 133 and the rotation plate 17A may be defined such that the second magnets 172 face opposite to the first magnets 133D of the first carrier part 133.

When the first carrier part 133 rotates, the second magnets 172 receive the effects by the magnet force from the first magnets 133D. Thereby, the rotation plate 17A rotates about the rotation axis 171 toward the same direction with the first carrier part 133. As described above, the rotation plate 17A can be made to rotate in conjunction with the rotation of the first carrier part 133. That is, by simple configurations, the rotation plate 17A can be made to rotate.

Furthermore, as shown in Fig. 5, the rotation plate 17A has a smaller diameter than the first carrier part 133. Thereby, the rotation plate 17A can rotate at the higher speed than the first carrier part 133 when the first carrier part 133 rotates.

Now, the rotation plate 17A may merely be made to rotate by using the first magnets 133D and the second magnets 172. That is, the first magnets 133D and the second magnets 172 may each be configured from a plurality of the magnets having different magnet poles and there is no need for disposing the magnets having the different magnetic poles alternatively. For example, at least one first magnet 133D is disposed at the one part of the first carrier part 133 and at least one second magnet 172 may be disposed at the one part of rotation plate 17A. Furthermore, either the first magnet 133D or the second magnet 172 may be a magnetic material such as an iron plate etc.

As shown by a sign 10001 of Fig. 10, the cut-tablet MD1 carried by the first carrier part 133 contacts with the rotation plate 17A. The cut-tablet MD1 receives the force from the rotation plate 17A, which faces to the normal line of the rotation plate 17A at the position where the cut-tablet MD1 contacts with the rotation plate 17A and which faces to the direction of the dispensing port 18 side. The speed of the rotation plate 17A along the normal-line direction is called as "peripheral speed P3". Since the rotation plate 17A rotates in the higher speed than the first carrier part 133, the peripheral speed P3 is larger than the first speed P1. The speed element of the peripheral speed P3 to the direction to which the passage path Ro extends may preferably be larger than the speed element of the first speed P1 to the direction to which the passage path Ro extends.

As shown by the sign 10001 of Fig. 10, if the cut-tablet MD 1 carried by the first carrier part 133 becomes contact with the rotation plate 17A, the cut-tablet MD1 is accelerated by the influence of the rotation plate 17A. Thereby, the cut-tablet MD1 moves in the speed P4 near to the peripheral speed P3, which is larger than the first speed P1, and then is dispensed from the dispensing port 18. In this situation, the speed P4 in which the cut-tablet MD1 moves is faster than the first speed P1 which is the moving speed of the cut-tablet MD2 that is carried on the placing face A of the first carrier part 133. Thus, the cut-tablet dispensed before (MD1) can move by the longer distance than the following cut-tablet MD2. Thus, as shown by the sign 10002 of Fig. 10, the distance between the cut-tablet MD1 after the contact with the rotation plate 17A and the cut-tablet MD2 before the contact with the rotation plate 17A becomes apart.

As described above, since the rotation plate 17A can further enhance the speed of the cut-tablet MD1 to be dispensed from the dispensing port 18, the possibility that makes the distance between the cut-tablet MD1 and the following cut-tablet MD2 apart can be enhanced. Thus, the precise dispensing of the tablets one by one can be possible. That is, since the medicine carried to the position of the rotation plate 17A disposed to the guiding part 132 becomes contact with the rotation plate 17A, the moving speed of the medicine toward the direction to the dispensing port 18 is increased so that the precise dispensing of tablets one by one can be possible.

Furthermore, as shown in Fig. 5 and Fig. 10, recesses approximately parallel to the rotation axis 171 are formed at the lateral side of the rotation plate 17A (lateral side contacting with cut-tablets). Thereby, since the friction force between the rotation plate 17A and the cut-tablet can be enlarged, the rotation force from the rotation plate 17A can be transmitted more effectively to the cut-tablets.

Here, as shown by the sign 10001 of Fig. 10, depending on the shapes of the cut-tablets and the positional relation between continued two cut-tablets, there is the possibility that plural cut-tablets are placed on the first carrier part 133.

For example, as shown in Fig. 7, it is assumed that the cut-face of the preceding cut-tablet MD1 faces to the width regulation body 15 and the cut-face of the following cut-tablet MD2 faces to the guiding member 16 and the guiding part 132. In this condition, as shown by the sign 7001 of Fig. 7, when the cut-tablets MD 1 and MD2 contact or become close each other at the surface other than the cut-face, the cut-tablet MD1 has placed on the first carrier part 133 before the cut-tablet MD2 is placed on the first carrier part 133. Thus, as shown by the sign 7002 of Fig. 7, even though the cut-tablet MD1 does not contact with the rotation plate 17A, the spacing between the cut-tablet MD1 and the cut-tablet MD2 can be made apart.

However, as shown Fig. 10, the following phenomenon may happen in a condition where the cut-face of the preceding cut-tablet MD1 faces opposite to the guiding member 16 and the guiding part 132 and the cut-face of the following cut-tablet MD2 faces opposite to the width regulation body 15. That is, in this condition as shown by the sign 10001 of Fig. 10, when the cut-tablet MD1 and the cut-tablet MD2 contact or become close each other at the surface other than the cut-face, the cut-tablet MD2 can also be placed on the first carrier part 133 just after the cut-tablet MD1 has placed on the first carrier part 133. In this case, the spacing between the cut-tablets MD1 and MD2 cannot be apart sufficiently and there is the possibility that the cut-tablet MD1 and MD2 are dispensed at the same time.

As described above, by making one part of the rotation plate 17A protrude from the guiding part 132 at the upper region of the first carrier part 133, as shown by the sign 10002 of Fig. 10, the moving speed of the preceding cut-tablet MD1 can be increased. Thus, even in a case where the cut-tablet MD1 and the following cut-tablet MD2 are placed on the first carrier part 133 together, the spacing between the cut-tablet MD1 and the cut-tablet MD2 can be made apart. In short, even in a case where plural cut-tablets are placed on the first carrier part 133, the moving speed only for the cut-tablet carried before can be increased, and hence, this cut-tablet can only be dispensed. Thus, the probability that the cut-tablets can be dispensed precisely one by one may be enhanced.

In the conventional medicine dispensing cassette, as shown in Fig. 2, there is the possibility that the plural cut-tablets are dispensed at the same time. Specifically, in the cut-tablet formed by cutting the sugar-coated tablet shown by the sign 2002 of Fig. 2, center regions of the upper face part and the bottom face part at the cut-face are not flat and are unstable and easy to roll when placed on a plane. In addition, since the cut-tablet formed by cutting the tablet having a swelling at the center thereof as shown by the sign 2001 and the sign 2003 has the shape near circular shape in its cut-face, this is unstable and easy to roll when placed on a plane. Thus, there was the possibility that the following cut-tablet also falls off from the dispensing port when one cut-tablet should be dispensed. However, with respect to the tablet shown by the sign 2001, such phenomenon may occur when the cut-tablet formed by cutting the tablet having a small center-part region with an approximately flat.

In addition, the cut-tablet formed by cutting the tablet which has thinner end parts than the center part as shown by the sign 2003, the sign 2004, and the sign 2006, when dispensed continuously, there is the possibility that the preceding cut-tablet and the following tablet become closer. Particularly, for example, as shown in Fig. 7 and Fig. 10, with respect to two cut-tablets, if the end regions uncut condition are alternately positioned each other, there is the possibility that the spacing between the preceding cut-tablet and the following cut-tablet cannot be made apart sufficiently. Since the conventional medicine dispensing cassette does not have the mechanism for making the distance between these cut-tablets apart, plural cut-tablets could be dispensed at the same time. Furthermore, when the cut-tablet formed by cutting the polygonal tablet as shown by the sign 2005 or the sign 2007 is dispensed, similar problem might occur.

Here, the medicine dispensing cassette 1 of the present embodiment comprises as described above the carrier part 13 including the first carrier part 133 and the second carrier part 134 and the rotation plate 17A. Since the first carrier part 133 rotates at the faster speed than the second carrier part 134, the distance between the cut-tablet carried before and placed on the first carrier part 133 and the cut-tablet carried subsequently and placed on the second carrier part 134 can be made apart. Furthermore, since the rotation plate 17A rotates at the faster speed than the first carrier part 133, the cut-tablet contacting with the rotation plate 17A is further accelerated from the moving speed when carried on the first carrier part 133. Thus, if two cut-tablets are placed on the first carrier part 133 at the same time, the distance between these cut-tablets can be made apart.

As described above, the medicine dispensing cassette 1 can make the distance between the carried cut-tablets apart. Thus, even in a case where the cut-tablet easy to roll and/or the cut-tablet easy to contact or easy to become close each other is dispensed, the distance between the cut-tablet can be made apart. Thus, the possibility of dispensing plural cut-tablets at the same time may be lowered and the cut-tablets can be dispensed precisely one by one.

### (Modification Example)

Plural rotation plates 17A may be disposed to the medicine dispensing cassette 1. For example, two or more rotation plate 17A may be disposed along the passage path Ro. In addition, two or more rotation plates 17A may be disposed in an overlapped condition along the Z axis direction. Furthermore, the rotation plate 17A may merely be disposed to one part of the lateral wall defining the passage path Ro, and for example, may be disposed at the region opposite to the guiding part 132 on the second wall face 15S2 of the width regulation body 15. As described above, the rotation plate 17A may merely be disposed so as to make one part protrude from at least one lateral face defining the passage path Ro.

Besides, the carry-supporting mechanism 17 may merely one that enhances the moving speed of the cut-tablet dispensed to the dispensing port 18 by acting on the cut-tablet. For example, the carry-supporting mechanism 17 may be an air-blow part being able to send the wind facing toward the dispensing port 18 to the cut-tablet placed on the first carrier part 133.

Furthermore, the rotation plate 17A may be driven separately from the first carrier part 133. For example, the rotation plate 17A may be connected to a driving member different from the driving member for driving the first carrier part 133 of the motor-base 10. Besides, in this case, the first carrier part 133 does not comprise the first magnet 133D and the rotation plate 17A does not comprise the second magnet 172, respectively. Since the rotation plate 17A can be driven separately from the first carrier part 133, for example, the rotation speed of the rotation plate 17A can be changed depending on kinds of the tablets. Thus, for example, the rotation speed of the rotation plate 17A may be brought faster than a predetermined speed for the tablet that plural cut-tablets are easy to fall off at the same time. In addition, and for example, the rotation speed of the rotation plate 17A may be brought slower than a predetermined speed for the tablet being easy to break. The predetermined speed may be, for example, the rotation speed of the rotation plate 17A when rotating in conjunction with the first carrier part 133 by the first magnets 133D and the second magnets 172.

### [Configuration of Motor-Base (Controller Part•Storage Part)]

On the basis of Fig. 11, the controller part 50 and the storage part 60 of the motor-base 10 will be described. Fig. 11 is a block diagram illustrating the configuration examples of the medicine dispensing cassette 1 and the motor-base 10.

The motor-base 10 comprises, as shown in Fig. 11, the controller part 50 and the storage part 60 as well as above-described configurations. The controller part 50 controls administratively each part of the motor-base 10 and the medicine dispensing cassette 1. Functions of the controller part 50 may be realized by making CPU (Central Processing Unit) execute a program stored in the storage part 60. The storage part 60 stores various programs executed by the controller part 50 as well as data used by the programs. The controller part 50 comprises essentially a rotation body controller part 51, regulation body controller part 52, and clock part 53.

The rotation body controller part 51 makes the first rotation mechanism rotate by controlling the driving of the driving member 103. Thereby, the rotation of the first rotation body 121 is controlled. Besides, the rotation body controller part 51 makes the second rotation mechanism rotate by controlling the driving for the driving member 104. Thereby, the rotation of the first carrier part 133 for the circular carrier part 131 is controlled. The rotation body controller part 51 controls, for example, the rotation directions and the rotation speeds of the first rotation body 121 and the circular carrier part 131.

The rotation body controller part 51 controls the first rotation body 121 and the circular carrier part 131 independently. The rotation body controller part 51, makes first rotation body 121, for example, rotate usually in the positive-feeding direction and at a constant speed during dispensing processing of the cut-tablets. On the other hand, the circular carrier part 131 switches the positive-feeding motion and the reverse-feeding motion. Besides, the rotation speed under the positive-feeding and the rotation speed under the reverse-feeding of the first carrier part 133 may be set individually. For example, the rotation speed under the positive-feeding and the rotation speed under the reverse-feeding may each be set with plural steps (for example, 7 steps). Besides, the rotation speed under the positive-feeding may be set depending on the size of the cut-tablet (diameter of cut-tablet). For example, the rotation speed under the positive-feeding may be set larger as the size of the cut-tablet becomes larger.

The rotation body controller part 51 may switch the positive-feeding motion temporarily to the reverse-feeding motion when the count sensor 101 has not detected the cut-tablet for a given time duration (first given time duration). In this case, for example, the second carrier part 134 may be fed reversely by a first distance. That is, for example, the second carrier part 134 may allow to feed the cut-tablet on the passage path Ro reversely by the first distance. The switching motion in this instance is called as a first switching motion (reverse motion 1).

The first distance is the distance corresponding to the distance from the first displacement member 16A to the second displacement member 16B. The rotation body controller part 51 realizes, for example, the reverse-feeding motion by the first distance by making the second carrier part 134 rotate to approximately 15° about the rotation axis through the first carrier part 133. Furthermore, as the first given time duration, when the rotation speed of the first carrier part 133 is lowest under the positive feeding, the sufficient time duration may be set such that the cut-tablet present around the first displacement member 16A is dispensed from the dispensing port 18. Here, clocking of the first given time duration may be started from the time when the positive-feeding motion of the circular carrier part 131 initiates the positive feeding motion (positive rotation motion) or from the time when the count sensor 101 detects the cut-tablet dispensed before by one.

Furthermore, the rotation body controller part 51 may switch, when the count sensor 101 has not detected the cut-tablet for further given time duration (second given time duration), the positive feeding motion to the reverse feeding motion temporarily. In this case, for example, the second carrier part 134 may be fed reversely by a second distance being longer than the first distance. That is, for example, the second carrier part 134 may make the cut-tablet on the passage path Ro feed reversely by the second distance. The switching motion in this instance is called as a second switching motion (reverse motion 2).

By making the rotation body controller part 51 perform the first switching motion and the second switching motion, when the clogging of the cut-tablets caused by the guiding part 132 occurs, the directions of the cut-tablets can be changed by using the first displacement member 16A and the second displacement member 16B. Thus, the possibility for cancelation for clogging of the cut-tablets may be enhanced.

Besides, the rotation body controller part 51 may also switch the positive feeding motion to the reverse feeding motion temporarily also when the count sensor 101 detects the cut-tablet within the first given time duration. In this case, for example, the second carrier part 134 may be made reversely fed by a third distance. That is, for example, the second carrier part 134 may the cut-tablet on the passage path Ro fed reversely by the third distance. The switching motion in this instance is called as a third switching motion (reverse motion 3).

The rotation body controller part 51 performs, for example, the third switching motion when receiving a detection result from the count sensor 101 acknowledging that the cut-tablet is detected. Thereby, the circular carrier part 131 becomes the reverse feeding temporarily such that the possibility, which the cut-tablet to be the next object for dispensing falls off together with already dispensed cut-tablet from the dispensing port 18, may be reduced. Thus, the counting error will be lowered.

Now, the third distance may preferably be set to the distance to an extent that the above counting error does not occur. According to the present embodiment, the rotation body controller part 51 realizes the reverse feeding motion by the third distance with making the second carrier part 134 rotate approximately 5° about the rotation axis through the first carrier part 133. However, the rotation body controller part 51 may stop the rotation of the circular carrier part 131 in the positive feeding motion rather than performing the third switching motion.

In addition, it may be set depending on every kind of the medicines that the third switching motion is performed or not performed. Furthermore, rather than performing the third switching motion every time the count sensor 101 counts the dispensed cut-tablet, this motion may be performed every time the dispensed cut-tablets are counted for plural times (every time a plurality of the cut-tablets are dispensed).

In addition, the rotation body controller part 51, when the first carrier part 133, second carrier part 134, and rotation plate 17A can be driven independently, may control each of the first carrier part 133, second carrier part 134, and rotation plate 17A.

The regulation body controller part 52 makes the height regulation body moving mechanism drive by controlling driving of the driving member 105. Thereby, movements of the height regulation body 14 to the ±Z directions are controlled. Furthermore, the regulation body controller part 52 makes the width regulation body moving mechanism drive by controlling driving of the driving member 106. Thereby, the movement of the width regulation member 15 to an extending direction of the piston part 15A2 is controlled. The regulation body controller part 52 controls movements of the height regulation body 14 and the width regulation body 15, when adjusting the carrying height W1 and the carrying widths W21 and W22, as pre-processing for the dispensing processing of the cut-tablets. In addition, the regulation body controller part 52 controls movements of the height regulation body 14 and width regulation body 15 independently.

The clock part 53 may measure the first given time duration and/or the second given time duration. The clock part 53 measures, for example, the time after the count sensor 101 detects the cut-tablet. Furthermore, the clock part 53 may acknowledge, when measured the first given time duration and the second given time duration, the fact that these time durations have passed to the rotation body controller part 51.

### [Motion in Medicine Dispensing Cassette]

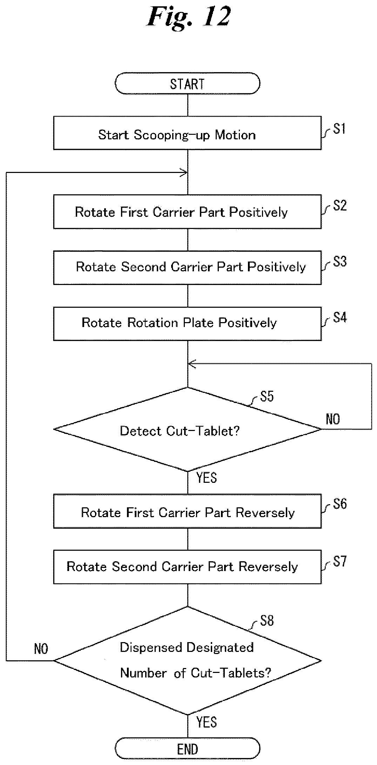

Next, on the basis of Fig. 12, a motion example of the medicine dispensing cassette 1 will be described. Fig. 12 is a flowchart of the motion example in the medicine dispensing cassette 1. According to the present invention, rotation speeds of the first carrier part 133 may be allowed to be set in 7 steps of step 1 (lowest speed) - step 7 (highest speed).

After the cut-tablet is inputted to the first rotation body 121 (inner race) and thereafter the dispensing processing of the cut-tablet has started, the regulation body controller part 52 adjusts the carrying height W1 and the carrying widths W21 and W22 by adjusting the height regulation body 14 and the width regulation body 15. Then, the rotation body controller part 51 starts a scooping-up motion for making the cut-tablet transfer from the first rotation body 121 to the circular carrier part 131 (outer race) by rotating the first rotation body 121 (S1).

Then, the rotation body controller part 51 makes the circular carrier part 131 feed positively. The rotation speed may be set, for example, depending on the sizes of inputted cut-tablet, to any one of step 1-step 3.

Particularly, the rotation body controller part 51 makes the first carrier part 133 rotate (positive rotation) by driving the driving member 104 of the motor-base 10 (S2). With the rotation of the first carrier part 133, the planetary gears 134B-134D rotate and the second carrier part 134 rotates (positive rotation) in the speed slower than the first carrier part 133 (S3). Furthermore, with the rotation of the first carrier part 133, the first magnets 133D and the second magnets 172 interact to make the rotation plate 17A rotate (positive rotation) (S4).

The cut-tablet scooped-up at the receiver part 12 transfers from the first rotation body 121 to the second carrier part 134. When the cut-tablet transfers on the placing face 134A of the second carrier part 134, the cut-tablet is carried by the rotation of the second carrier part 134 along the passage path Ro. After the cut-tablet reaches the guiding part 132, the cut-tablet moves along the guiding part 132 and transfers from the second carrier part 134 to the first carrier part 133 in the second speed P2. Thereafter, the cut-tablet transferred to the first carrier part 133 is carried in the first speed P1. Thereby, the distance between the cut-tablet carried on the first carrier part 133 and the cut-tablet carried on the second carrier part 134 becomes apart. Then, the cut-tablet carried on the first carrier part 133 reaches around the dispensing port 18. The cut-tablet reached around the dispensing port 18 contacts with the rotation plate 17A. By the function of the rotation plate 17A, the cut-tablet is accelerated and moves in the speed near to the peripheral speed P3 larger than the first speed P1, and then, is dispensed from the dispensing port 18. Thereby, the dispensing is performed under a condition where the distance is further largely apart. Now, even if two cut-tablets carried sequentially do not become apart sufficiently between the cut-tablet being contacted with the rotation plate 17A and the following cut-tablet and are carried to the first carrier part 133, by the function of the rotation plate 17A, subjected two cut-tablets can be made apart.

The rotation body controller part 51 determines whether or not the count sensor 101 detects the cut-tablet fallen off from the first carrier part 133 to the dispensing port 18 (S5). The rotation body controller part 51 determines, when the count sensor 101 detects the cut-tablet and receives the detection result, that the cut-tablet fallen off to the dispensing port 18 has been detected. The rotation body controller part 51, when determined that the cut-tablet fallen off to the dispensing port 18 has been detected (YES in S5), performs the third switching motion. That is, the rotation body controller part 51 makes the second carrier part 134 feed reversely by the third distance (for example, by 5°). Particularly, the rotation body controller part 51 makes the rotation direction of the first carrier part 133 reverse by making the driving member 104 rotate reversely (S6). By reversing the rotation direction of the first carrier part 133, the rotation direction of the second carrier part 134 also becomes reversed (S7). At this time, the rotation direction of the rotation plate 17A becomes also reversed. Now, according to the present embodiment, the rotation speed in the reverse feeding may be evenly set to the step 7. Furthermore, the rotation body controller part 51 may not perform the third switching motion as described above and may stop the rotation of the first carrier part 133. After S7, the rotation body controller part 51 determines whether or not the designated number of the cut-tablets has been dispensed (S8), if not (NO in S8), the processing after S2 will be repeated again.

Now, the rotation body controller part 51, if the count sensor 101 has not detected the cut-tablet fallen off to the dispensing port 18 (NO in S5), continues the positive feeding motion (positive rotation motion) of S4 until the count sensor 101 detects the cut-tablet. If S5 is NO, the rotation body controller part 51 may, when the count sensor 101 has not detected the cut-tablet during the first given time duration, perform the first switching motion. In addition, if the count sensor 101 does not detect during further second given time duration, the second switching motion may be performed.

The rotation body controller part 51 repeats the processing of S2-S8 until the designated number of the cut-tablets is dispensed. The medicine dispensing cassette 1 terminates the dispensing motion processing if the designated number of the cut-tablets has been dispensed (YES in S8).

### [Modified Example]

In the above embodiment, the cut-tablet dispensed by the medicine dispensing cassette 1 may be an OD (Orally Disitegration) tablets, which have been cut. The OD tablet is, when being cut, broken to generate fine fragments. Thus, when the OD tablets are dispensed by using the medicine dispensing cassette 1, the cut-tablets may be screened to remove the fragments.

When the cut-tablet to be dispensed is one that the OD tablet has been cut, there is the case that the fragments generated from cutting may be read as the cut-tablet and may provide the cause of the counting error. Then, by screening the cut OD tablets beforehand and after removing the fragments, the cut OD tablets are inputted to the receiver part 12 of the medicine dispensing cassette 1. Thus, the medicine dispensing cassette 1 can perform the dispensing with reducing effects of the fragments.

When the cut-tablets of the OD tablets are screened, the total weight of the cut tablets will decrease, i.e., the loss is generated because of removal of the fragments, however, such loss will be less than the loss when the OD tablets are cut. Thus, the effect on the weight becomes relatively small when the cut-tablets of the OD tablets are screened. That is, for reducing the possibility of the erroneous counting of the fragments as the cut-tablets, it is considered to be useful to screen the cut-tablet for dispensing the cut-tablet of OD tablet by the medicine dispensing cassette 1.

As described above, by dispensing the cut and screened OD tablets using the medicine dispensing cassette 1, the cut-tablets of the OD tablets may be dispensed precisely one by one. When the above method is used for dispensing the cut-tablets of the OD tablets, the medicine dispensing cassette 1 can dispense the cut-tablets of 95% or more precisely one by one within the dispensable cut tablets possibly to be dispensed.

The medicine dispensed by the medicine dispensing cassette 1 is not limited to the cut-tablets. For example, the medicine may be the tablet in a non-cut state (integer tablet). In this case, the medicine dispensing cassette 1 may not comprise the guiding part 16. Even though the non-cut tablet such as sugar-coated tablets shown by the sign 2002 of Fig, 2, there are tablets which are easy to roll and to cause the counting error. The medicine dispensing cassette 1, for such integer tablets easy to roll, may also make the distance between the preceding integer tablet and the following integer tablet apart. Thus, the medicine dispensing cassette 1 can also dispense such integer tablets precisely one by one.

Furthermore, with respect to the integer tablets, for example shown by the sign 2004 and the sign 2006 of Fig. 2, depending on the contacting condition or the closing condition between the preceding integer tablet and the following tablets, there is a fear that these two integer tablets are dispensed at the same time. Furthermore, in the case where the integer tablets are relatively small, there is a fear that these two tablets are dispensed at the same time. The medicine dispensing cassette 1, with comprising the carrier part 13 and the carry-supporting mechanism 17, even in any condition of contacting or closing between the preceding integer tablet and the following integer tablet, or even in a case that the integer tablets are relatively small, can reduce the possibility that these two integer tablets are dispensed at the same time.

In addition, the medicine dispensing cassette 1 may only comprise either the first carrier part 133 and the second carrier part 134 or the carry-supporting mechanism 17. For example, the medicine dispensing cassette 1 may not comprise the carry-supporting mechanism 17. Even in this case, the medicine dispensing cassette 1 can enhance the possibility that sequential two tablets are made apart by the difference between the first speed P1 and the second speed P2 caused by the speed difference between the first carrier part 133 and the second carrier part 134. In addition, if this configuration is adopted, the first carrier part 133 may not comprise the first magnets 133D for making the rotation plate 17A rotate.

However, the medicine dispensing cassette 1, when comprising both of the first carrier part 133 as well as the second carrier part 134 and the carry-supporting mechanism 17, even if a plurality of the cut-tablets are placed on the first carrier part 133 at the same time, the proceeding cut-tablet can be accelerated by the rotation plate 17A. Thus, the medicine dispensing cassette 1 can make the distance between each of the cut-tablets apart such that the cut-tablets can be dispensed precisely one by one.

Furthermore, when the medicine dispensing cassette 1 does not comprise the first carrier part 133 and the second carrier part 134, the circular carrier part 131 of the carrier part 13 may be configured by one circular-shaped member realizing the positive-feeding motion or the reverse-feeding motion for the cut-tablet. In this case, the cut-tablet transfers from the receiver part 12 to the circular carrier part 131, and then, is carried by the rotation of the circular carrier part 131 along the passage path Ro. In addition, this cut-tablet is guided by the guiding part 132 and is accelerated by contacting with the rotating rotation plate 17A, and then, is dispensed from the dispensing port 18.

However, the medicine dispensing cassette 1, when comprising both of the first carrier part 133 as well as the second carrier part 134 and the carry-supporting mechanism 17, the distance between each of the cut-tablets can be made apart by not only the acceleration by the rotation plate 17A but also the speed difference between the first carrier part 133 and the second carrier part 134. Thus, the medicine dispensing cassette 1 can dispense the cut-tablets precisely one by one.

In summary, the medicine dispensing cassette 1 may merely comprise either one of the first carrier part 133 as well as the second carrier part 134 or the carry-supporting mechanism 17. In this case, the medicine dispensing cassette 1 can enhance, for medicines in various shapes, the possibility that the medicines to be dispensed to the dispensing port 18 are made apart from the medicine following to this medicine. Thus, the possibility that the medicines are dispensed to the dispensing part 18 one by one can be enhanced. However, the medicine dispensing cassette 1, when comprising both of the first carrier part 133 as well as the second carrier part 134 and the carrier-supporting mechanism 17, can further enhance the possibility that the medicines to be dispensed to the dispensing port 18 is made apart from the medicine following to this medicine. Thus, according to this case, the medicine dispensing cassette 1 can dispense the medicines to the dispensing port 18 one by one more precisely.

Here, as described above, when one medicine falls off from the dispensing port 18, the rotation body controller part 51 makes the circular carrier part 131 rotate reversely or stop. However, in a case where the sequential two medicines become contact or become close, depending on the shapes of medicines, by the reverse rotation or the rotation to the positive-feeding direction before stopping, the medicine following to the medicine already fallen off from the dispensing port 18 may roll to the positive-feeding direction by inertia. In this case, the following medicine will fall off just after the preceding medicine has fallen off such that there is a fear that the count sensor 101 counts two medicines as to be one medicine. According to the medicine dispensing cassette 1 of the present embodiment, it is possible to make apart the following medicine from the preceding medicine such that, even if the following medicine somewhat rolls due to the inertia, the following medicine can be stopped and holded on the circular carrier part 131. That is, the possibility causing the counting error due to the rolling of following medicine can be lowered.

Besides, the medicine dispensing cassette 1 as described above can perform precise dispensing by relatively simple configurations. Thereby, the present embodiments can contribute to an achievement of Target 12 "liability of product and liability of use" and the like in the Sustainable Developing Goals (SDGs)

### [Implementation Example by Software]

Functions of the medicine dispensing cassette 1 (hereafter called to "device") can be realized by a program for making a computer function as this device, which makes the computer function as each of the controller blocks in this device (specifically each part included in the controller part 50).

In this case, the above device comprises, as the hardware for executing the above program, the computer having at least one controller device (for example a processor) and at least one storage device (for example a memory). By executing the above program with this controller device and the storage device, each of the functions described in each of the above embodiments can be realized.

The above program may not be temporal and may be recorded in one or more recordable media that can be read by a computer. This recordable media may be comprised or may not be comprised in the above device. In the latter case, the program can be supplied by any communication media copper-wiredly and/or wirelessly.

Furthermore, a part or the entire part of each of the above controller blocks can be realized by logic circuits. For example, an integrated circuit in which logical circuits functioning each of the above controller blocks are formed therein may also be encompassed in this invention. In addition to the above, it may be possible to realize the functions of each of the controller blocks by a quantum computer.

### [Additional Remarks]

The present invention should not be limited to each of the embodiments described above; various modifications may be possible within the scope of the present invention; and the embodiments, which are derived by combining technical means each disclosed in different embodiments, should be encompassed in the present invention.

### Description of Numerals

1 medicine dispensing cassette (medicine dispensing device)
12 receiver part
13 carrier part
15 width regulation body (lateral wall)
16 guiding part (lateral wall)
17 carry-supporting mechanism
17A rotation plate
18 dispensing port
122 separation wall (lateral wall of receiver part)
122A a plurality of tooth
131 circular carrier part
132 guiding part (lateral wall)
133 first carrier part
133Aplacing face
133B first tooth
133C second tooth
133D first magnets
134 second carrier part
134A placing face
134B-134D planetary gears
171 rotation axis
172 second magnets
P1 first speed
P2 second speed
P3 peripheral speed
Ro passage path (carriage-path)

## Claims

1. A medicine dispensing device for dispensing a medicine to a dispensing port by carrying the medicine inputted, comprising:
a receiver part receiving the medicine,
a carrier part carrying the medicine to the dispensing port, the carrier part including a circular part positioned outside the receiver part when viewed in a plane view,
wherein the carrier part comprises:
a first carrier part adjacent to the dispensing port for carrying the medicine in a condition where the medicine is placed thereon,
a second carrier part positioned inside the first carrier part for carrying the medicine in a condition where the medicine is placed thereon, and
a guiding part guiding the medicine from the second carrier part to the first carrier part while guiding the medicine from the first carrier part to the dispensing port,
wherein the first carrier part and the second carrier part is able to carry the medicine such that a first speed of a medicine guided to the first carrier part to the dispensing port becomes larger than a second speed of a medicine guided from the second carrier part to the first carrier part.

2. The medicine dispensing device of claim 1, wherein a rotation speed of the first carrier part is larger than a rotation speed of the second carrier part.

3. The medicine dispensing device of claim 1 or 2, wherein the second carrier part comprises at least one planetary gear, and
the first carrier part comprises a plurality of first tooth engaging with the planetary gear and functions as an inner gear by a plurality of the first tooth,
wherein further comprises a sun gear having a plurality of tooth positioned inside the second carrier part while engaging with the planetary gear.

4. The medicine dispensing device of claim 3, wherein a plurality of the tooth functioning as the sun gear is positioned at an upper part of a lateral wall of the receiver part.

5. The medicine dispensing device of claim 4, wherein the first carrier part comprises a plurality of second tooth at a position opposite to a plurality of the first tooth, and
the first carrier part and the second carrier part rotate by a driving force given to a plurality of the second tooth.

6. The medicine dispensing apparatus any one of claims 1-5, wherein each of the first carrier part and the second carrier part comprises a placing face for placing the medicine thereon, and
the guiding part is disposed at an upper region of the placing face so as to cross the first carrier part and the second carrier part.

7. The medicine dispensing device of any one of claims 1-6, further comprising a carry-supporting mechanism for enhancing a moving speed of a medicine dispensed to the dispensing port.

8. The medicine dispensing device of claim 7, wherein the carry-supporting mechanism is at least one rotation plate contacting with a medicine dispensed to the dispensing port.

9. The medicine dispensing device of claim 8, wherein on a placing faces for placing the medicine of the first carrier part and the second carrier part, at least one lateral wall defining a passage path is comprised, and
the rotation plate rotates about a rotation axis extending to a direction vertical to the placing faces and one part protrudes from the at least one lateral wall at a position adjacent to the dispensing port of the first carrier part.

10. The medicine dispensing device of claim 8 or 9, wherein a peripheral speed of the rotation plate is larger than the first speed.

11. The medicine dispensing device of any one of claims 8-10, wherein the first carrier part comprises a placing face for placing the medicine thereon,
the rotation plate has a rotation axis extending to a direction vertical to the placing face,
to the first carrier part, first magnets are disposed at a position outside the rotation axis, and
to the rotation plate, a second magnets are disposed at a position along a circumferential direction of the rotation plate and at a position becoming opposite to the first magnets when the first carrier part or the rotation plate is made to rotate.

12. A medicine dispensing device for dispensing a medicine from a dispensing port by carrying the inputted medicine to the dispensing port, comprising:
a receiver part receiving the medicine,
a carrier part carrying the medicine to the dispensing port, the carrier part including a circular part positioned outside the receiver part when viewed in a plane view,
wherein the carrier part comprises:
a circular carrier part adjacent to the dispensing port for carrying the medicine in a condition where the medicine is placed thereon,
a guiding part guiding the medicine to the dispensing port from the circular carrier part,
at least one lateral wall defining a passage path of the medicine on a placing face for placing the medicine of the circular carrier part, and
a rotation plate rotating about a rotation axis extending a direction vertical to the placing face while one part protruding from the at least one lateral wall at a position adjacent to the dispensing port of the circular carrier part.
